# EUROPEAN PATENT SPECIFICATION

(11) **EP 1 748 714 B1**
(45) Date of publication and mention of the grant of the patent: **01.07.2009**
(21) Application number: 04815628.5
(22) Date of filing: 22.12.2004
(51) Int. Cl.: A47J 43/24

(54) **METHODS AND APPARATUS FOR A VEGETABLE SPINNER**
VERFAHREN UND GERÄT ZUM SCHLEUDERN VON GEMÜSE
PROCEDES ET APPAREIL POUR ESSOREUSE CENTRIFUGE A LEGUMES

(30) Priority: 14.05.2004 US 845997
(43) Date of publication of application: 07.02.2007
(73) Proprietor: Zyliss USA Corp., Irvine CA 92618 (US)
(72) Inventor: CHENG, Larry, Palo Alto, CA 94303 (US); FOURT, Jesse, La Honda, CA 94020 (US); LUKIC, Branko, Menlo Park, CA 94025 (US); PAPADOPOULOS, Annetta, Palo Alto, CA 94301 (US); OVERTHUN, Thomas, San Francisco, CA 94117 (US)
(74) Representative: Curley, Donnacha John
(86) International application number: PCT/US2004/043598
(87) International publication number: WO 2005/115209

(56) References cited:
- WO-A-03/043477
- FR-A- 1 012 262
- US-A- 5 490 453
- US-A- 5 671 664
- US-A- 5 865 109
- US-A- 6 018 883

## Description

### FIELD OF THE INVENTION

The present invention generally relates to food preparation devices and, more particularly, to a spinner device configured to spin-dry salads, vegetables, and other such food items.

### BACKGROUND OF THE INVENTION

It is often desirable, when preparing lettuce, vegetable, and the like, to rinse these food items to remove unwanted dirt, chemicals, or other debris. In doing so, however, the excess moisture that remains on the food items can be undesirable from a culinary perspective. This is particularly the case with lettuce and other salad greens, which tend to retain moisture, and are thus difficult to coat with oil-based dressings.

To solve this problem, many manufacturers have developed vegetable drying devices, or "salad spinners." Most of these drying devices use a rotating basket that removes moisture through centrifugal force. Rotation of the basket is generally accomplished through electrical or mechanical means. Such prior art devices are unsatisfactory in a number of respects.

For example, many mechanical drying devices use a crank. Such cranks tend to be slippery and restrain the user to movement within a single plane (i.e., the plane defined by the clank). It is thus difficult and tiresome to grasp and move the crank repeatedly.

Other mechanical drying devices includes a pull handle attached to the device via a cord. The basket in such devices is generally coupled to the cord directly such that the basket rotates one direction when the cord is first pulled and then, after the cord winds onto a spindle and the handle is retracted, the basket stops and reverses in a second direction when the handle is pulled again. These reversals of direction are inefficient, and result in a tiresomely repetitive process for the user.

Furthermore, known drying devices either do not include a suitable braking mechanism (to slow down and stop the rotating basket), or include brakeing mechanisms that are inefficient and subject to early wear-out.

Furthermore, known drying devices, because of their awkwardly-placed drive mechanisms, cranks, and the like, do not typically have a flat top surface. As a result, it is impossible (and/or unsafe) to stack other kitchen items (bowls, containers, etc.) on top of such devices. This is a major drawback where kitchen-space is a premium.

Accordingly, there is a need for drying devices which overcome these and other limitation of the prior art.
US6018883 discloses a device for drying food. The device includes a bowl having a bottom wall and a sidewall terminating in a top edge, a cover removably connected to the top edge of the bowl, a basket assembly including a basket and a removable lid disposed in the bowl and rotatable relative to the bowl about an axis, and a brake assembly carried by the cover and engageable with the lid for stopping rotation of the basket assembly.
WO03043477 discloses a salad shaker comprising a lower part of a container and a cover which is placed on the same and comprises a cable pull drive by which means the salad sieve can be rotated. The drive is connected to a rotating plate by means of a free-running device which acts on both sides, and enables the rotational direction of the salad sieve to be changed in a spring-biased manner. The repeated change in rotational direction causes the shaking efficiency to be significantly improved. The restoring force of the spring automatically reels in the cable and holds the handle in a desired position on the cover in a spring-biased manner.

### SUMMARY OF THE INVENTION

In general, the present invention provides a novel vegetable drying device configured to remove excess moisture from suitably-sized vegetables through a spinning action. In accordance with one embodiment of the present invention, the device generally includes an outer bowl, an inner basket, a lid, and a cover assembly, wherein the cover assembly includes a pull-handle and a brake mechanism. The user grasps the handle and pulls outward, thus providing rotational energy, through a suitable mechanical coupling, to the inner basket and lid. The pull handle and attached cord are preferably retractable.

### BRIEF DESCRIPTION OF THE DRAWINGS

A more complete understanding of the present invention may be derived by referring to the detailed description when considered in connection with the Figures, where like reference numbers refer to similar elements throughout the Figures, and:

FIG. 1 is a cross-sectional overview of a food dryer in accordance with one embodiment of the present invention;

FIG. 2 is an overview of a drive mechanism in accordance with one embodiment of the present invention;

FIGS. 3A and 3B are schematic top-views illustrating operation of the drive mechanism shown in Fig. 2;

FIG. 4 is an overview of a brake mechanism in accordance with one embodiment of the present invention;

FIG. 5 is an overview of a drive mechanism in accordance with an alternate embodiment of the present invention;

FIG. 6 is an exploded view of the drive mechanism shown in Fig. 5;

FIG. 7 is a top view illustration of a food dryer in accordance with one embodiment of the present invention;

FIG. 8 is a side view illustration of the food dryer of Fig. 7; and

FIG. 9 is an overview of an alternative sprag design;

FIG. 10 is an overview of a drive mechanism in accordance with one embodiment of the present invention; and

FIG. 11 is a close-up of a portion of the drive mechanism shown in Fig. 10.

### DETAILED DESCRIPTION

The following description is of exemplary embodiments of the invention only, and is not intended to limit the scope, applicability or configuration of the invention in any way. Rather, the following description is intended to provide a convenient illustration for implementing various embodiments of the invention. As will become apparent, various changes may be made in the function and arrangement of the elements described in these embodiments without departing from the scope of the invention.

For example, while the present invention is often described in the context of spin-drying salad components such as lettuce and the like, it will be appreciated that the invention is not so limited, and that the methods and devices described herein may be used in connection with the drying of any suitably-sized fruit, vegetable, or any other food item.

In general, the present invention provides a novel vegetable drying device configured to remove excess moisture from suitably-sized food items through a spinning action. In accordance with one embodiment of the present invention, and as shown in the attached figures, the device generally includes an outer bowl, an inner basket, a lid, and a cover assembly, wherein the cover assembly includes a pull-handle and a brake mechanism. The user grasps the handle and pulls outward, thus providing rotational energy, through a suitable drive mechanism, to the inner basket and lid.

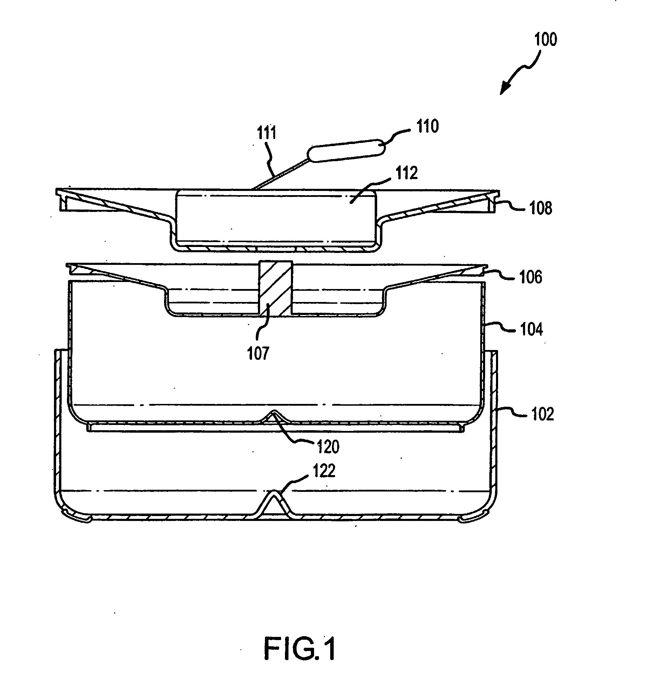

Referring to Figure 1, a drying device 100 in accordance with one embodiment of the present invention comprises an inner basket (or "basket") 104 having a lid 106 and configured to fit within an outer bowl (or "bowl") 102. A cover assembly 108 is removeably coupled to lid 106, e.g., via a protrusion extending from lid 106. Cover assembly 108 includes a drive mechanism 112 (described in further detail below) coupled to a pull handle (or "handle") 110 and attached cord 111.

Lid 106 is removeably attached to basket 104 (e.g., through a compressive fit, where the outer lip of lid 106 fits around the outer diameter of basket 104) such that both lid 106 and basket 104 may rotate with respect to bowl 102. In the illustrated embodiment, a generally conical shaped protrusion 122 extends from the center of the bottom of bowl 102, and a corresponding indentation 120 is provided in basket 104 such that basket 104 may rotate within bowl 102 with relative freedom when indentation 120 seats on protrusion 122. Basket 104 is configured to allow water to escape, e.g., through a plurality of perforations, vents, or the like.

In general, the food item to be dried is placed within basket 104, and lid 106 (which is generally rotateably fixed to a drive and brake apparatus within cover 108) is placed on basket 104. The user then pulls handle 110 such that drive mechanism 112 is activated (via cord 111), which then causes rotation of basket 104 with respect to bowl 102. Liquid attached to the food item is propelled by centrifugal force radially outward to collect within bowl 102. The user may repeatedly pull handle 110 until the food item is sufficiently dry.

It will be appreciated that handle 110 may have a variety of shapes, and is thus not limited by the embodiment shown in the drawings. Similarly, it will be appreciated that the various components may be manufactured using any suitable material, including various plastics, ceramics, metals, and glasses.

In one embodiment, for example, outer bowl 102 is a transparent or translucent plastic. Similarly, portions of cover assembly 108 and lid 106 may be transparent or translucent plastic to facilitate viewing of the food item during processing. Bowl 102 (and basket 104) may have any convenient diameter and height, and is not limited by the scale of the attached drawings.

In the preferred embodiment, drive mechanism 112 is configured such that rotational energy is generated when handle 110 is pulled outward, but wherein basket 104 rotates freely when the cord is stationary or is in a retracting (or retracted) state. That is, the user may repeatedly pull handle 110 to effect rotation of basket 104 in a single direction. This is accomplished via a suitable clutch mechanism.

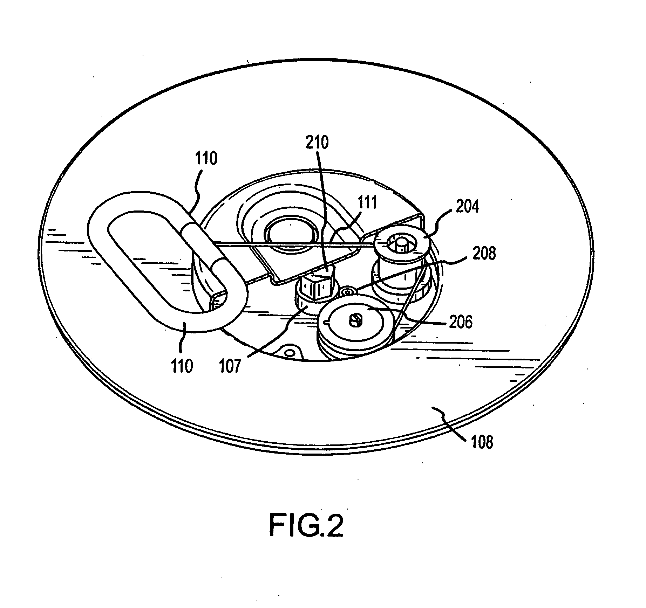

More particularly, referring to Fig. 2, one embodiment of the present invention includes a drive mechanism 112 comprising a spool 206, a pulley 204, and an idler 107. Cord 111 is connected to (and through a spring action, wraps around) spool 206. Pulley 204 acts to redirect cord 111, and may be at any number of locations depending upon a particular design, or may be dispensed with altogether. When handle 110 is pulled outward, spool 206 directly or indirectly (e.g., through various gears) causes idler 208 to engage output gear 210 which is coupled to lid portion 107 (shown on Fig. 1). A brake 202, described in further detail below, may also be incorporated into drive mechanism 112.

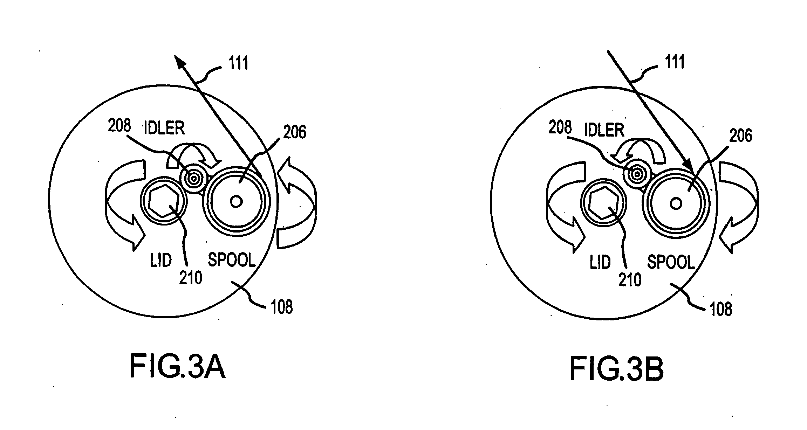

Referring to Figs. 3A and 3B, in this embodiment, when cord 111 is pulled, spool 206 and idler 208 engage output gear 210 such that the lid and basket spin (Fig. 3A); however, when the cord 111 retracts, idler 208 disengages from output gear 210, allowing the lid and basket to spin freely.

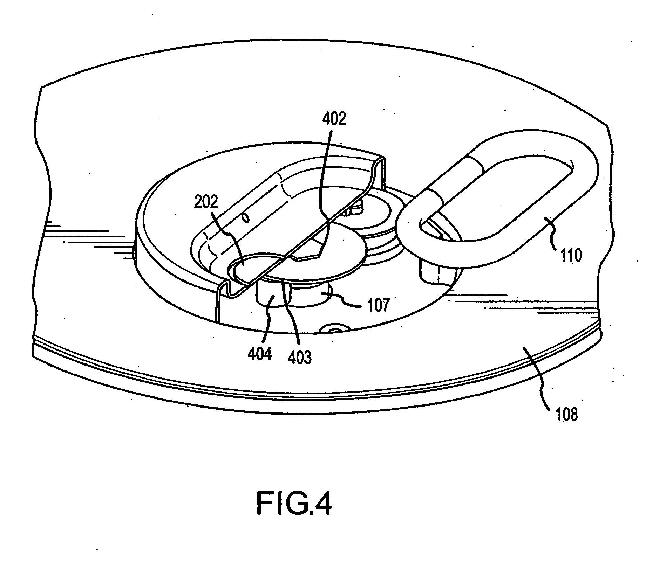

Fig. 4 shows one embodiment of a brake mechanism that may be used in connection with the present invention. As shown, a brake button 202 is included within cover 108, and is configured such that, when it is pressed downward, a brake pad 402 is squeezed between a surface of brake button 202 and a backing post 404 also coupled to lid 108. The resulting brake is effective as the brake pad 402 is squeezed between two braking surfaces (404 and 202). This design has advantages over prior art braking arrangements, which include brake devices that contact and apply frictional force to the like. That is, the present invention is advantageous in that it includes an efficient disc-break apparatus that does not contact the lid, but which slows the drive mechanism, thus indirectly stopping motion of the basket.

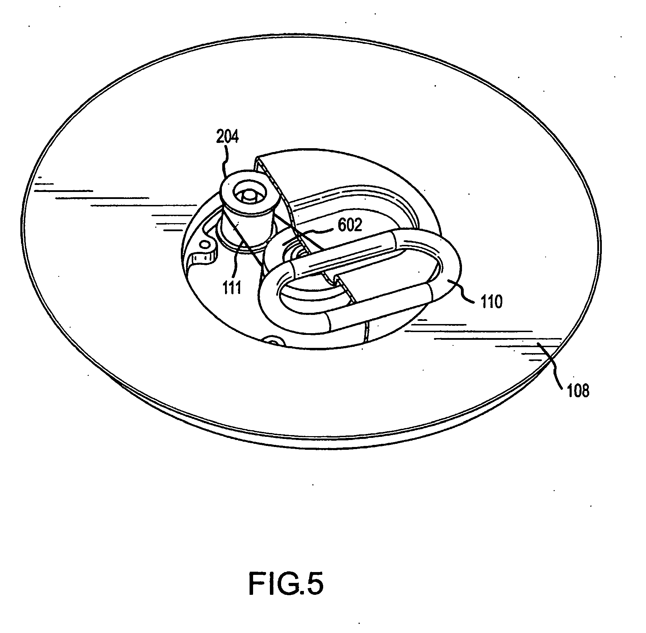

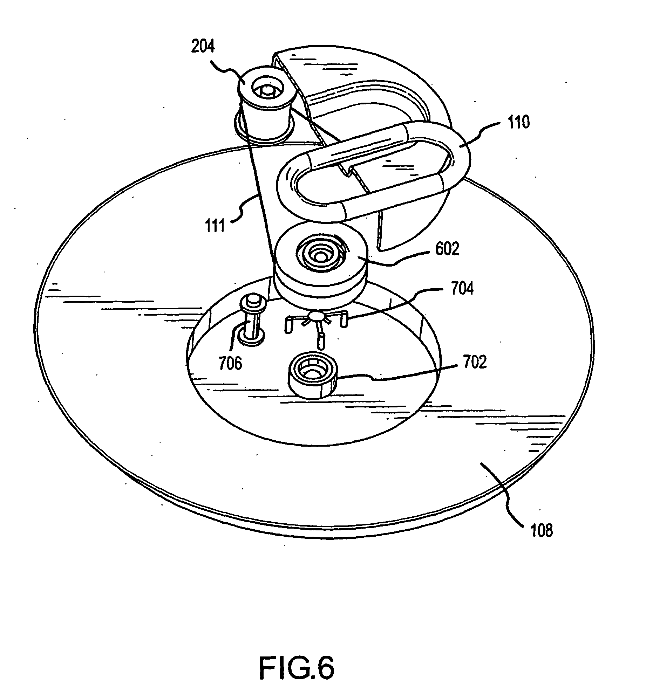

Fig. 5 shows an alternate embodiment of a drive mechanism. As shown, cord 111 (which again is coupled to handle 110) fits around pulley 204 then directly interfaces with roller clutch assembly 602, which is mechanically coupled to the lid. This is shown in further detail in Fig. 6. An axel 706 extends from cover 108 to secure pulley 204. A clutch inner race 702 (on the spinning lid) engages a clutch roller assembly (or "sprag") 704, which in turn engages a clutch outer race within assembly 602.

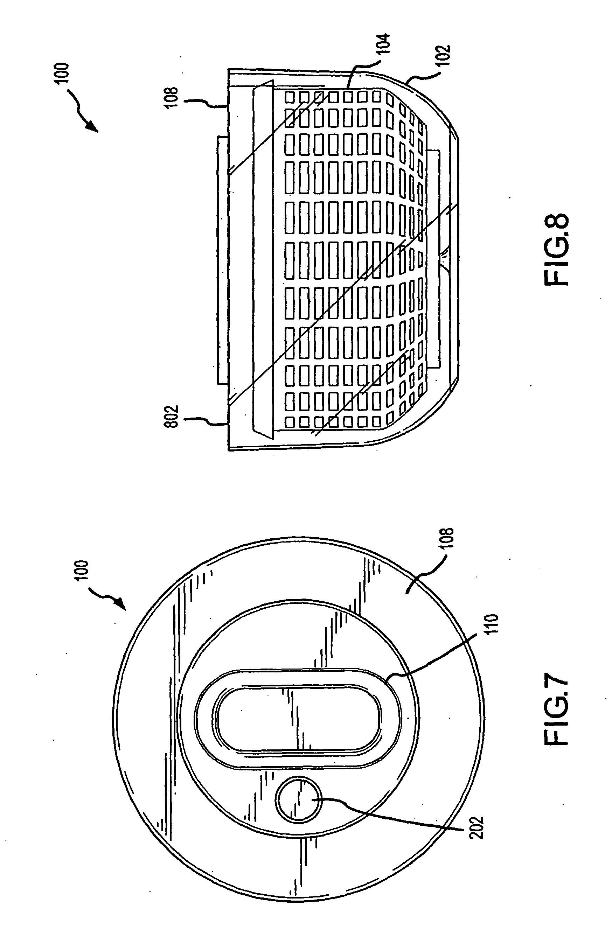

Figs. 7 and 8 show top and side views respectively of a closed drying device 100 in accordance with one embodiment of the present invention. As shown handle 110 and the cord preferably retract into cover assembly 108, providing a substantially flat or planar top surface 802, allowing stacking of items above unit 100.

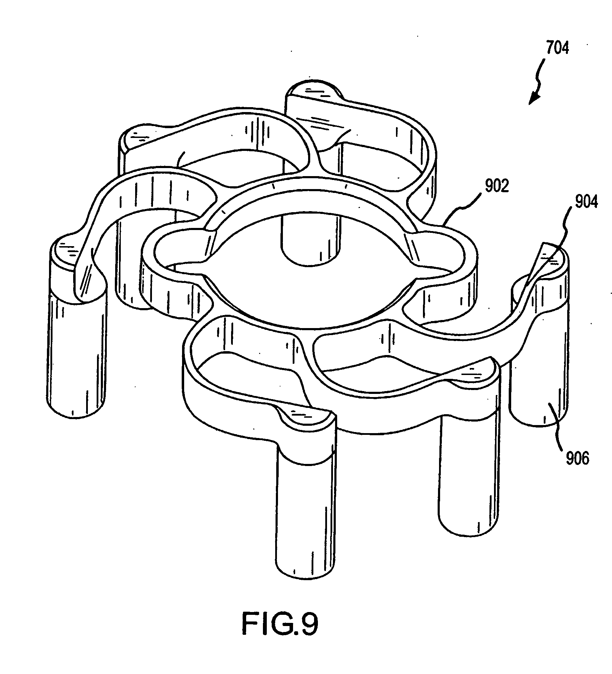

Fig. 9 depicts an alternate sprag design (see, e.g., Fig. 6, item 704). The sprag design shown in Fig. 9 includes a plurality (e.g., six) of generally radial, curved, elastically deformable members 904 extending from a central ring-like structure 902. Cylindrical portions 906 are configured to engage a clutch mechanism as sprag 704 rotates and members 904 are forced outward. It will be appreciated that many other sprag and clutch designs may be used in connection with the present invention.

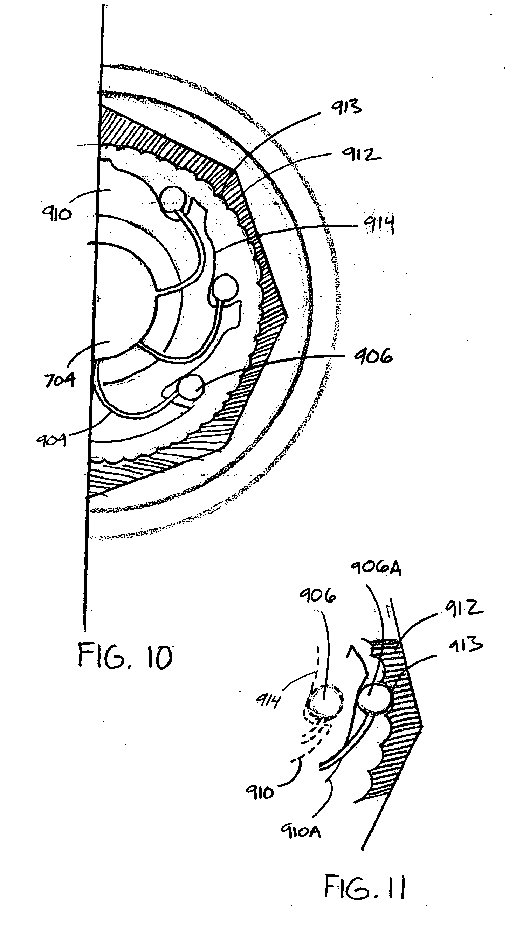

More particularly, as shown in Fig. 10, sprag 704 includes a number of deformable members 904 and cylindrical portions 906. An inner gear or race 910 is mechanically couple to the action of pull cord 110 (e.g., roller clutch 602 in Fig. 6). Inner gear 910 includes outer arcuate surfaces 914 against which cylindrical portions 906 ride during operation. Surfaces 914 are generally contoured with increasing radius such that, when inner gear 910 is rotated (i.e., clockwise in Fig. 10), cylindrical portions 906 move outward to engage outer gear or race 912, which itself includes a number of concavities 913. Outer gear 912 is mechanically coupled to lid 108.

Thus, when the pull-cord is pulled, inner gear 910 rotates clockwise (relative to Fig. 10), such that cylindrical portions 906 engage outer gear 912, thus causing the lid to rotate. When the pull-cord is released, inner gear 910 rotates counter-clockwise, and cylindrical portions disengage from outer gear 912, thus allowing the lid to spin freely. This is illustrated in the close-up shown in Fig. 11, in which cylindrical potion 906 moves outward to position 906A when inner gear 910 moves to position 910A, forcing cylindrical portion 906A to within and forms a mechanical linkage with outer gear 912 via concavity 913.

In accordance with other aspects of the present invention, the basket 104 is configured such that it is perforated, but does not include thick ribs, and is therefore easier to clean.

The various embodiments of drive mechanisms described herein are in no way meant to limit the range of possible mechanical systems that might be used to effect the desired spinning of basket 104 when handle 110 is pulled outward. That is, the present invention encompasses any combination of gears, cams, pulleys, clutches, or other mechanical components that achieve the desired mechanical characteristics as described in detail above.

Other advantages and structural details of the invention will be apparent from the attached figures, which will be well understood by those skilled in the art. The present invention has been described above with to a particular exemplary embodiment. However, many changes, combinations and modifications may be made to the exemplary embodiments without departing from the scope of the present invention.

## Claims

1. A food drying device comprising:
a cover assembly(108);
an outer bowl (102);
an inner basket (104) configured to fit within and rotate with respect to the outer bowl (102), the inner basket having a lid (106)
a drive mechanism (112) for causing rotation of said inner basket (104), and
a braking device;
the food drying device being **characterized in that** the braking device comprises:
a disc- brake pad (402) mechanically coupled to said lid (106);
a backing post (404) mechanically coupled to said cover assembly (108); and
a button (202) actuatable by a user to squeeze said disc-brake pad between said button and said backing post to cause braking of the drive mechanism.

2. A drying device according to claim 1 further wherein
the cover assembly is removeably attached to said outer bowl, said cover assembly including a handle, said drive mechanism, and a cord connecting said drive mechanism to said handle, wherein said drive mechanism is mechanically coupled to said lid when said cover assembly is attached to said outer bowl, and wherein said drive mechanism imparts rotational energy to said lid and said basket in a first direction when said handle is pulled away from said cover assembly, and wherein said basket and said lid freely rotate in said first direction when said handle is retracted;.

3. The drying device of claim 2, wherein said drive mechanism includes an input gear coupled to an idler, and wherein said idler is mechanically coupled to said lid when said handle is pulled way from said cover assembly, and decoupled from said lid when said handle is retracted.

4. The drying device of claim 2, wherein said drive mechanism includes a spool connected to said cord, a clutch outer race, a clutch inner race coupled to said lid, and a clutch roller assembly provided between said inner race and said outer race.

5. The drying device of claim 4, wherein said clutch roller assembly comprises a sprag assembly configured to engage said outer race when said handle is pulled away, and disengage from said outer race when said handle is retracted.

6. The drying device of claim 4, wherein said inner race includes a plurality of arcuate surfaces, and wherein said sprag assembly includes a plurality of cylindrical portions configured to contact said arcuate surfaces.

7. The drying device of claim 6, wherein said outer race includes a plurality of concavities configured to accept said cylindrical portions of said sprag assembly.

8. The drying device of claim 2, wherein said outer bowl includes an inner protrusion, and wherein said inner basket includes an indentation configured to accept said protrusion.

9. The drying device of claim 2, wherein said handle is configured to be retractable into said cover assembly such that said cover assembly is substantially flat.

10. A drying device according to claim 1, wherein the inner basket is perforated and the lid is substantially transparent, the drying device further comprising:
a cover assembly removeably attached to said outer bowl, said cover assembly including a retractable handle, the drive mechanism, and a cord connecting said drive mechanism to said handle, wherein said drive mechanism is mechanically coupled to said lid when said cover assembly is attached to said outer bowl, and wherein said drive mechanism imparts rotational energy to said lid and said basket in a first direction when said handle is pulled away from said cover assembly, and wherein said basket and said lid freely rotate in said first direction when said handle is retracted..

11. The device of claim 1, wherein said drive mechanism comprises:
a spool carrying a pull chord; and
a clutch associated with said spool and configured to engage to transmit rotational energy to said basket during pulling of said pull chord and to disengage thereafter to permit said basket to rotate freely.

12. The device of claim 1, further comprising a cover assembly removeably attached to said outer bowl, said cover assembly including a retractable handle, a drive mechanism, and a cord connecting said drive mechanism to said handle, wherein said drive mechanism is mechanically coupled to said lid when said cover assembly is attached to said outer bowl, and wherein said drive mechanism imparts rotational energy to said lid and said basket in a first direction when said handle is pulled away from said cover assembly, and wherein said basket and said lid freely rotate in said first direction when said handle is retracted, said drive mechanism including a spool connected to said cord, a clutch outer race, a clutch inner race coupled to said lid, and a clutch roller assembly provided and mechanically coupled to said inner race and said outer race.

## Patentansprüche

1. Lebensmitteltrocknungsvorrichtung aufweisend:
- eine Abdeckbaugruppe (108);
- einen äußeren Behälter (102);
- einen inneren Korb (104), der so gestaltet ist, dass dieser innerhalb des äußeren Behälter (102) aufnehmbar ist und relativ zu diesem rotiert, wobei der innere Korb einen Deckel (106) aufweist;
- einen Antriebsmechanismus (112) zum Bewirken einer Rotation des inneren Korbs (104), und
- eine Bremsvorrichtung;
wobei die Lebensmitteltrocknungsvorrichtung **dadurch gekennzeichnet ist, dass** die Bremsvorrichtung
- -einen Schreibenbremsbelag (402), der mechanisch mit dem Deckel (106) verbunden ist;
- -einen Bremszapfen (404) der mechanisch mit der Abdeckbaugruppe (108) verbunden ist; und
- -einen Knopf (202), welcher von einem Nutzer bedienbar ist, um den Schreibenbremsenbelag, der zwischen dem Knopf und dem Bremszapfen angeordnet ist, auszudrücken, um das Bremsen des Antriebsmechanismus zu bewirken,
aufweist.

2. Trocknungsvorrichtung nach Anspruch 1, bei der weiter die Abdeckbaugruppe demontierbar am äußeren Behälter angebracht ist, die Abdeckbaugruppe, welche einen Griff aufweist, der Antriebsmechanismus und eine Schnur den Antriebsmechanismus mit dem Griff verbinden, wobei der Antriebsmechanismus mechanisch mit dem Deckel gekoppelt ist, wenn die Abdeckbaugruppe an den äußeren Behälter angebracht ist, und wobei der Antriebsmechanismus Rotationsenergie zu dem Deckel und dem Korb in einer ersten Richtung weiterleitet, wenn der Griff von der Abdeckbaugruppe weggezogen wird, und wobei der Korb und der Deckel in diese erste Richtung frei rotieren können, wenn der Griff eingeholt wird.

3. Trocknungsvorrichtung nach Anspruch 2, bei dem der Antriebsmechanismus mit einem Freilauf gekoppeltes Antriebsritzel aufweist, wobei der Freilauf mechanisch mit dem Deckel gekoppelt ist, wenn der Griff von der Abdeckbaugruppe weggezogen wird und von dem Deckel entkoppelt ist, wenn der Griff eingeholt wird.

4. Trocknungsvorrichtung nach Anspruch 2, bei dem der Antriebsmechanismus eine mit der Schnur verbundene Spule, einen äußeren Kupplungsring und einen inneren Kupplungsring, die an den Deckel gekoppelt sind, und eine Kupplungsrollenbaugruppe aufweist, die zwischen dem inneren und dem äußeren Ring vorgesehen ist.

5. Trocknungsvorrichtung nach Anspruch 4, bei dem die Kupplungsrollenbaugruppe eine Freilaufbaugruppe aufweist, die derart ausgestaltet ist, dass sie in den äußeren Ring eingreift, wenn der Griff gezogen wird und nicht mit dem äußeren Ring in Eingriff steht wenn der Griff eingeholt wird.

6. Trocknungsvorrichtung nach Anspruch 4, bei dem der innere Ring eine Vielzahl von Präzisionsoberflächen und die Freilaufbaugruppe eine Vielzahl von zylindrischen Bereichen aufweist, welche so ausgebildet sind, damit sie mit den Präzisionsoberflächen in Kontakt stehen.

7. Trocknungsvorrichtung nach Anspruch 6 bei dem der äußere Ring eine Vielzahl von Wölbungen aufweist, die so ausgestaltet sind, damit sie die zylindrischen Bereiche der Freilaufbaugruppe aufnehmen.

8. Trocknungsvorrichtung nach Anspruch 2, bei dem der äußere Behälter einen inneren Vorsprung aufweist, und bei der der innere Korb Vertiefungen ausgebildet hat, um die Vorsprünge aufzunehmen.

9. Trocknungsvorrichtung nach Anspruch 2, bei der der Griff so ausgestaltet ist, dass er in die Abdeckbaugruppe eingeholt werden kann, so dass die Abdeckbaugruppe im Wesentlichen flach ist.

10. Trocknungsvorrichtung nach Anspruch 1, bei der der innere Korb perforiert ist und der Deckel im Wesentlichen transparent ist, wobei die Trocknungsvorrichtung weiter aufweist:
- eine Abdeckbaugruppe, die demontierbar an den äußeren Behälter angebracht ist, die Abdeckbaugruppe einen einholbaren Griff aufweist, der Antriebsmechanismus und eine Schnur den Antriebsmechanismus mit dem Griff verbinden, wobei der Antriebsmechanismus mechanisch mit dem Deckel gekoppelt ist, wenn die Abdeckbaugruppe an dem äußeren Behälter befestigt ist, und der Antriebsmechanismus Rotationsenergie an den Deckel weitergibt und der Korb in einer ersten Richtung weiterleitet, wenn der Griff von der Abdeckbraugruppe weggezogen wird und der Korb und der Deckel in diese erste Richtung frei rotieren können, wenn der Griff eingeholt wird.

11. Vorrichtung nach Anspruch 1, bei der der Antriebsmechanismus aufweist:
- eine Spule, welche die Zugschnur trägt;
- eine Kupplung, die mit der Spule verbunden und so ausgestaltet ist, damit sie während des Ziehens der Zugschnur im Eingriff steht, um Rotationsenergie auf den Korb zu übertragen und danach außer ein Griff ist, um den Korb zu ermöglichen frei zu rotieren.

12. Vorrichtung nach Anspruch 1, weiter aufweisend eine Abdeckbaugruppe, die entfernbar an dem äußeren Behälter angebracht ist, die Abdeckbaugruppe einen einholbaren Griff aufweist, einen Antriebsmechanismus und eine Schnur aufweist, die den Antriebsmechanismus und den Griff verbindet, wobei der Antriebsmechanismus mechanisch mit dem Deckel verbunden ist, wenn die Abdeckbaugruppe an die äußere Behälter angebracht ist, und der Antriebsmechanismus Rotationsenergie an den Deckel und den Korb in einer ersten Richtung weiterleitet, wenn der Griff von der Abdeckbaugruppe weggezogen wird, und der Korb und der Deckel in dieser ersten Richtung frei drehen können, wenn der Griff eingeholt wird, wobei der Antriebsmechanismus eine Spule, die mit der Schnur verbunden ist, einen äußeren Kupplungsring, einen inneren Kupplungsring, der mit dem Deckel verbunden ist, und eine Kupplungsrollenbaugruppe aufweist, die vorgesehen ist mechanisch den inneren Ring mit dem äußeren Ring zu koppeln.

## Revendications

1. Dispositif de séchage d'aliments comprenant :
un ensemble de recouvrement (108) ;
un bol extérieur (102) ;
un panier intérieur (104) configuré pour s'adapter dans le bol extérieur (102) et pour tourner par rapport à celui-ci, le panier intérieur ayant un couvercle (106) ;
un mécanisme d'entraînement (112) pour provoquer la rotation dudit panier intérieur (104), et un dispositif de freinage ;
le dispositif de séchage d'aliments étant **caractérisé en ce que** le dispositif de freinage comprend :
une plaquette de frein à disque (402) mécaniquement couplée audit couvercle (106) ;
une borne d'appui (404) mécaniquement couplée audit ensemble de recouvrement (108) ; et
un bouton (202) pouvant être actionné par un utilisateur pour serrer ladite plaquette de frein à disque entre ledit bouton et ladite borne d'appui pour provoqu le freinage du mécanisme d'entraînement.

2. Dispositif de séchage selon la revendication 1, dans lequel l'ensemble de recouvrement est en outre fixé de manière détachable sur ledit bol extérieur, ledit ensemble de recouvrement incluant une poignée, ledit mécanisme d'entraînement et une corde reliant ledit mécanisme d'entraînement à ladite poignée, dans lequel ledit mécanisme d'entraînement est mécaniquement couplé audit couvercle lorsque ledit ensemble de recouvrement est fixé sur ledit bol extérieur, et dans lequel ledit mécanisme d'entraînement confère une énergie de rotation audit couvercle et audit panier dans un premier sens lorsque ladite poignée est éloignée par traction dudit ensemble de recouvrement, et dans lequel ledit panier et ledit couvercle tournent librement dans ledit premier sens lorsque ladite poignée est rétractée.

3. Dispositif de séchage selon la revendication 2, dans lequel ledit mécanisme d'entraînement inclut un engrenage d'entrée couplé à un galet, et dans lequel ledit galet est mécaniquement couplé audit couvercle lorsque ladite poignée est éloignée par traction dudit ensemble de recouvrement, et séparé dudit couvercle lorsque ladite poignée est rétractée.

4. Dispositif de séchage selon la revendication 2, dans lequel ledit mécanisme d'entraînement inclut une bobine reliée à ladite corde, un chemin de roulement extérieur d'embrayage, un chemin de roulement intérieur d'embrayage couplé audit couvercle, et un ensemble de rouleaux d'embrayage disposé entre ledit chemin de roulement intérieur et ledit chemin de roulement extérieur.

5. Dispositif de séchage selon la revendication 4, dans lequel ledit ensemble de rouleaux d'embrayage comprend un ensemble à roue libre configuré pour venir en engagement avec ledit chemin de roulement extérieur lorsque ladite poignée est éloignée par traction, et pour se libérer dudit chemin de roulement extérieur lorsque ladite poignée est rétractée.

6. Dispositif de séchage selon la revendication 4, dans lequel ledit chemin de roulement intérieur inclut une pluralité de surfaces curvilignes, et dans lequel ledit ensemble à roue libre inclut une pluralité de parties cylindriques configurées pour être en contact avec lesdites surfaces curvilignes.

7. Dispositif de séchage selon la revendication 6, dans lequel ledit chemin de roulement extérieur inclut une pluralité de concavités configurées pour recevoir lesdites parties cylindriques dudit ensemble à roue libre.

8. Dispositif de séchage selon la revendication 2, dans lequel ledit bol extérieur inclut une saillie intérieure, et dans lequel ledit panier intérieur inclut une entaille configurée pour recevoir ladite saillie.

9. Dispositif de séchage selon la revendication 2, dans lequel ladite poignée est configurée pour pouvoir être rétractée dans ledit ensemble de recouvrement de sorte que ledit ensemble de recouvrement est sensiblement plat.

10. Dispositif de séchage selon la revendication 1, dans lequel le panier intérieur est perforé et le couvercle est sensiblement transparent, le dispositif de séchage comprenant en outre :
un ensemble de recouvrement fixé de manière détachable sur ledit bol extérieur, ledit ensemble de recouvrement incluant une poignée rétractable, le mécanisme d'entraînement et une corde reliant ledit mécanisme d'entraînement à ladite poignée, dans lequel ledit mécanisme d'entraînement est mécaniquement couplé audit couvercle lorsque ledit ensemble de recouvrement est fixé sur ledit bol extérieur, et dans lequel ledit mécanisme d'entraînement confère une énergie de rotation audit couvercle et audit panier dans un premier sens lorsque ladite poignée est éloignée par traction dudit ensemble de recouvrement, et dans lequel ledit panier et ledit couvercle tournent librement dans ledit premier sens lorsque ladite poignée est rétractée.

11. Dispositif selon la revendication 1, dans lequel ledit mécanisme d'entraînement comprend :
une bobine portant une corde de traction ; et
un embrayage associé à ladite bobine et configuré pour venir en engagement afin de transmettre de l'énergie de rotation audit panier pendant la traction de ladite corde de traction et pour se libérer ensuite afin de permettre audit panier de tourner librement.

12. Dispositif selon la revendication 1, comprenant en outre un ensemble de recouvrement fixé de manière détachable sur ledit bol extérieur, ledit ensemble de recouvrement incluant une poignée rétractable, un mécanisme d'entraînement et une corde reliant ledit mécanisme d'entraînement à ladite poignée, dans lequel ledit mécanisme d'entraînement est mécaniquement couplé audit couvercle lorsque ledit ensemble de recouvrement est fixé sur ledit bol extérieur, et dans lequel ledit mécanisme d'entraînement confère une énergie de rotation audit couvercle et audit panier dans un premier sens lorsque ladite poignée est éloignée par traction dudit ensemble de recouvrement, et dans lequel ledit panier et ledit couvercle tournent librement dans ledit premier sens lorsque ladite poignée est rétractée, ledit mécanisme d'entraînement incluant une bobine reliée à ladite corde, un chemin de roulement extérieur d'embrayage, un chemin de roulement intérieur d'embrayage couplé audit couvercle, et un ensemble de rouleaux d'embrayage agencé et mécaniquement couplé audit chemin de roulement intérieur et audit chemin de roulement extérieur.
